# EUROPÄISCHE PATENTANMELDUNG

(11) **EP 1 583 251 A1**
(43) Veröffentlichungstag der Anmeldung: **05.10.2005**
(21) Anmeldenummer: 05007032.5
(22) Anmeldetag: 31.03.2005
(51) Int. Cl.: H04B 1/38, G03B 17/08

(54) **Wasserdichtes Gehäuse, insbesondere Unterwassergehäuse, für ein mit einer Kamera ausgerüstetes Mobiltelefon**

(30) Priorität: 01.04.2004 DE 102004016561; 02.06.2004 DE 102004027045; 30.11.2004 DE 102004057860
(71) Anmelder: Kuhn, Thomas, 90596 Schwanstetten (DE)
(72) Erfinder: Kuhn, Thomas, 90596 Schwanstetten (DE)
(74) Vertreter: Zech, Stefan Markus

(57) **Zusammenfassung**

Die Erfindung betrifft ein wasserdichtes Gehäuse (31), insbesondere Unterwassergehäuse, für ein mit einer Kamera ausgerüstetes Mobiltelefon (32), umfassend
a) ein wasserdichtes erstes Gehäuseteil (10) und
b) ein wasserdichtes zweites Gehäuseteil (11),
c) wobei erstes Gehäuseteil (10) und zweites Gehäuseteil (11) wasserdicht miteinander verbindbar oder verbunden sind,
d) wobei im ersten Gehäuseteil (10) und/oder im zweiten Gehäuseteil (11) zumindest ein transparenter Bereich (23, 18, 28, 11) vorgesehen und derart angeordnet ist, dass Aufnahmen mit der Kamera des in das Gehäuse eingesetzten Mobiltelefons durch den transparenten Bereich (23) erfolgen können.
e) wobei Befestigungsmittel zur Fixierung des Mobiltelefons zwischen erstem Gehäuseteil (10) und zweitem Gehäuseteil (11) vorgesehen sind, und wobei
f) die Befestigungsmittel durch ein transparentes und elastisches Material, insbesondere eine Folie (28) gebildet sind, die zunächst einen Teil des ersten Gehäuseteils (10) und/oder des zweiten Gehäuseteils (11) ausbildet.

## Beschreibung

Die Erfindung betrifft ein wasserdichtes (wasserfestes) Gehäuse, insbesondere ein Unterwassergehäuse, für ein mit einer Kamera ausgerüstetes Mobiltelefon. Unter Mobiltelefonen werden dabei nicht nur die unter der Bezeichnung "Handy" bekannten Mobiltelefone verstanden, sondern auch allgemein Funktelefone, Satellitentelefone sowie über das Festnetz betriebene sogenannte "schnurlose Telefone". Unter Ausrüstung mit einer Kamera ist beispielsweise zu verstehen, dass in das Mobiltelefon eine Kamera integriert ist. Es ist aber ebenso möglich, dass die Kamera extern als Zusatzgerät an das Mobiltelefon angebaut (z.B. angesteckt) wird. Die integrierte oder angebaute Kamera ermöglicht das Aufnehmen von Fotos oder Videos mit dem Mobiltelefon.

Zahlreiche der heute vertriebene Mobiltelefone sind bereits mit einer integrierten Kamera versehen bzw. eine Kamera kann an das Mobiltelefon als Zusatzgerät angebaut sein oder werden. Die Anzahl derartiger mit Kamera ausgerüsteter Mobiltelefone wird in Zukunft weiter ansteigen.

Dabei ist es gewünscht, dass derartige mit Kamera ausgerüstete Mobiltelefone vor Beschädigung oder Zerstörung durch übermäßige mechanische Einwirkungen wie Stoß, Druck oder Schlag, durch Verschmutzung, beispielsweise Staub, oder durch Feuchtigkeit oder Wasser, geschützt sein sollen.

Ferner ist die Verwendbarkeit der mit Kamera ausgerüsteten Mobiltelefone unter Wasser, beispielsweise beim Tauchen, oder im Wasser, beispielsweise beim Schwimmen oder bei Wassersportarten, gewünscht. Dabei soll auch das Aufnehmen von Fotos und Videos unter bzw. im Wasser möglich sein.

Um das Mitführen von Mobiltelefonen zu erleichtern und die Geräte vor Verschmutzung, Beschädigung und Zerstörung zu schützen, sind grundsätzlich hierfür ausgebildete Tragevorrichtungen, Hüllen und Gehäuse bekannt. So ermöglichen Hüllen aus flexiblem Material den einfachen Transport der Geräte, beispielsweise durch Anbringung der Hüllen an einem Gürtel. Durch entsprechende Ausbildung, beispielsweise transparente Folien über Anzeige und Tasten, könne die Mobiltelefone auch in diesen Hüllen betrieben werden. Ferner sorgen feste Transportschalen für einen Schutz der Mobiltelefone vor übermäßigen externen mechanischen Einwirkungen.

Nachteilig bei derartigen Hüllen, Schalen und Gehäusen für Mobiltelefon ist, dass diese nicht wasserfest ausgebildet sind. Mobiltelefone können durch Einwirkung von Wasser bzw. Feuchtigkeit beschädigt werden. Dies gilt insbesondere bei Verwendung unter Wasser, beispielsweise beim Tauchen, beim Verwendung im Wasser, beispielsweise beim Schwimmen oder bei Wassersportarten, aber auch bereits bei Lagerung bzw. Transport unter hoher Feuchtigkeitsbelastung, beispielsweise Mitführen des Mobiltelefons beim Sport in Taschen, die durch den Schweiß des Benutzers feucht werden. Unter derartigen Einsatzbedingungen können die oben genannten Vorrichtungen daher ein Mobiltelefon nicht vor Beschädigung oder Zerstörung durch Feuchtigkeit schützen.

Um das Mobiltelefon zumindest vor leichter Feuchtigkeitsbelastung, wie sie durch Schweiß des Benutzers hervorgerufen wird, zu schützen, ist aus JP 2002145345 A (Patent Abstracts of Japan) eine wasserdichte Hülle für ein Mobiltelefon bekannt. Diese Hülle besteht aus einem dünnen Gummi. Sie umgibt das Mobiltelefon vollständig. Eine Einlassöffnung wird dicht zugebunden. Einen zuverlässigen Schutz vor dem Eindringen von Wasser bei Einsatz unter bzw. in Wasser, wie vorstehend erläutert, ist durch eine derartige Hülle jedoch nicht zu erreichen. Insbesondere kann die Einlassöffnung leicht undicht werden oder sich gar öffnen. Auch kann schnell eine Beschädigung der Hülle auftreten, insbesondere unter extremen Einsatzbedingungen, beispielsweise beim Tauchen oder bei Wassersportarten.

Nachteilig bei den vorgenannten Hüllen bzw. Gehäusen für Mobiltelefone ist ferner, dass diese nicht im Hinblick auf Mobiltelefone, die mit einer Kamera zum Aufnehmen von Fotos oder Videos ausgerüstet bzw. ausrüstbar sind, ausgebildet sind. Insbesondere ermöglichen sie nicht den Einsatz der Kamera, d.h. das Aufnehmen von Fotos oder Videos mit der Kamera des in der Hülle bzw. dem Gehäuse eingebrachten Mobiltelefons. Somit lassen sich auch keine Unterwasseraufnahmen mit den Mobiltelefonen vornehmen.

Ein Gehäuse zur wasserdichten Einbringung eines Handcomputers (Personal Digital Assistant, PDA) ist bereits aus der US 2003/0095374 A1 bekannt. Dort wird auch die Möglichkeit von Unterwasseraufnahmen angesprochen. Ein gravierender Nachteil der dort beschriebenen Lösung besteht aber darin, dass für jedes Modell eines Handcomputers (jedes Modell eines Personal Digital Assistant) ein spezielles Gehäuse, wenigstens aber eine spezielle Membran bereitzustellen ist, die auf die Abmessungen des jeweiligen Modells abgestimmt ist, so dass für eine sichere Fixierung des Handcomputers Sorge getragen ist.

Bei der heute bekannten Anzahl verschiedener Modelle von Handcomputern (Personal Digital Assistant) bzw. Mobiltelefonen muss eine unüberschaubare Vielzahl von verschiedenen Gehäuseausbildungen bzw. Membranen o.ä. bereitgehalten werden, um ein jeweiliges Modell sicher in einem bestimmten Gehäusetyp zu fixieren.

Die Aufgabe der vorliegenden Erfindung besteht demgegenüber darin, die vorgenannten Nachteile zu überwinden, d.h. ein Gehäuse für ein mit einer Kamera ausgerüstetes Mobiltelefon anzugeben, das wasserfest ausgebildet ist und für eine Vielzahl unterschiedlicher Gerätetypen einsetzbar ist.

Diese Aufgabe wird gemäß der Erfindung durch ein wasserdichtes Gehäuse mit den Merkmalen des Patentanspruchs 1 gelöst. Vorteilhafte Ausgestaltungen und Weiterbildungen sind in den von Anspruch 1 abhängigen Ansprüchen angegeben. Eine Verwendung der Erfindung in einem Mobilfunk-Set ist in Anspruch 24, eine Weiterbildung in den von Anspruch 24 abhängigen Ansprüchen angegeben.

Das wasserdichte Gehäuse für ein mit einer Kamera ausgerüstetes Mobiltelefon gemäß Patentanspruch 1 umfasst
a) ein wasserdichtes erstes Gehäuseteil und
b) ein wasserdichtes zweites Gehäuseteil,
c) wobei erstes Gehäuseteil und zweites Gehäuseteil wasserdicht miteinander verbindbar oder verbunden sind,
d) wobei im ersten Gehäuseteil und/oder im zweiten Gehäuseteil zumindest ein transparenter Bereich vorgesehen und derart angeordnet ist, dass Aufnahmen mit der Kamera des in das Gehäuse eingesetzten Mobiltelefons durch den transparenten Bereich erfolgen können,
e) wobei Befestigungsmittel zur Fixierung des Mobiltelefons zwischen erstem Gehäuseteil und zweiten Gehäuseteil vorgesehen sind und wobei
f) die Befestigungsmittel durch ein transparentes und elastisches Material, insbesondere eine Folie gebildet sind, die zunächst einen Teil des ersten Gehäuseteils und/oder des zweiten Gehäuseteils ausbildet.

Eine Kernidee besteht folglich darin, dass das transparente und/oder elastische Material das in das Gehäuse eingesetzte Mobiltelefon im Gehäuse fixiert. Dies hat den Vorteil einer sicheren Bedienbarkeit des Mobiltelefons und schützt gleichzeitig das Telefon vor Beschädigungen durch fortwährendes Hin- und Herrutschen im Gehäuse.

Bei dem wasserdichten Gehäuse handelt es sich insbesondere um ein Unterwassergehäuse.

Bei dem transparenten und elastischen Material ist es auch möglich, dass das Material bereichsweise nicht transparent ausgebildet ist.

Der transparente Bereich kann getrennt von dem transparenten und elastischen Material ausgebildet sein. Beispielsweise kann ein Teil des ersten und/oder zweiten Gehäuseteils einen transparenten Bereich bilden. Auch das gesamte erste und/oder zweite Gehäuseteil kann einen transparenten Bereich bilden. Es ist aber ebenso möglich, dass das transparente und/oder elastische Material den transparenten Bereich oder einen der transparenten Bereiche umfasst oder bildet. Darüber hinaus können auch mehrere gleichartige und/oder verschiedenartige transparente Bereiche gemeinsam im Gehäuse vorgesehen sein.

Die mit der Erfindung erzielten Vorteile bestehen insbesondere darin, dass nunmehr ein Gehäuse vorliegt, das speziell an mit einer Kamera ausgerüstete Mobiltelefone angepasst ist. Dieses Gehäuse gewährleistet nicht nur Schutz vor Beschädigung oder Zerstörung durch übermäßige mechanische Einwirkungen, durch Verschmutzung oder durch Feuchtigkeit bzw. Wasser, sondern es ermöglicht dem Benutzer auch den Einsatz der Kamera, d.h. das Aufnehmen von Fotos bzw. Videos mit dem in das Gehäuse eingesetzten Mobiltelefon. Da das Gehäuse wasserdicht (wasserfest) ausgebildet ist, insbesondere als Unterwassergehäuse ausgebildet ist, ermöglicht es ferner das Mitführen und Benutzen des Mobiltelefons unter bzw. im Wasser, d.h. beispielsweise beim Tauchen, beim Schwimmen, bei Wassersportarten wie Wasserball oder beim Baden im Swimmingpool. Insbesondere kann der Benutzer mit Hilfe des Gehäuses Unterwasseraufnahmen mit seinem Mobiltelefon anfertigen.

Das transparente und/oder elastische Material hat den Vorteil, dass es die Benutzung von Tasten und/oder Anzeige des eingesetzten Mobiltelefons ermöglicht. Dadurch ist dem Benutzer auch die vollständige bzw. zumindest die nahezu vollständige Benutzung des eingesetzten Telefons möglich. Auf diese Weise kann er beispielsweise auch unter oder im Wasser wählen und telefonieren sowie Kurz-/Bild-/Videomitteilungen schreiben und versenden bzw. empfangen und lesen. Ebenso kann er Fotos bzw. Videos aufnehmen und auch versenden.

Jede Kamera weist eine Linse auf, über die das Licht des aufzunehmenden Objekts in das Innere der Kamera gelangt. Um die Benutzbarkeit der Kamera sicherzustellen, ist daher gemäß einer bevorzugten und zweckmäßigen Weiterbildung vorgesehen, dass der transparente Bereich einem Linsenbereich der Kamera des in das Gehäuse eingesetzten Mobiltelefons zugeordnet ist, insbesondere den Linsenbereich überdeckt.

In einer vorteilhaften Ausgestaltung ist das zur Halterung bzw. Fixierung des Mobiltelefons ausgebildete transparente und elastische Material, insbesondere die Folie als Silikonfolie ausgebildet. Silikonfolien zeichnen sich durch hohe UV-Beständigkeit und Kratzfestigkeit aus, sie werden nicht spröde und sind praktisch Wartungsfrei. Anders als im Stand der Technik muss die hier eingesetzte Folie auch nach längerem Gebrauch nicht getauscht werden.

In einer bevorzugten Ausgestaltung, welche die Wasserdichtigkeit in noch höherem Maße sicherstellt, ist das transparente und/oder elastische Material auch dauerhaft und/oder unlösbar mit dem zugeordneten ersten Gehäuseteil und/oder zweiten Gehäuseteil verbunden, insbesondere dadurch, dass zwei Gehäuseelemente des zugeordneten Gehäuseteils miteinander verschweißt oder verklebt werden. Die beim Stand der Technik nach US 2003/0095374 A1 notwendige Austauschbarkeit muss bei der Lösung nach der vorliegenden Erfindung nicht vorgesehen werden.

Durch die extrem hohe Elastizität der bevorzugtermaßen eingesetzten Silikonfolie können in den Abmessungen sehr unterschiedliche Mobiltelefone sicher zwischen erstem Gehäuseteil und zweitem Gehäuseteil fixiert werden, so dass das hier vorgeschlagene wasserdichte Gehäuse für eine Vielzahl in ihren Abmessungen unterschiedlich ausgebildeter Mobiltelefone verwendbar ist und nur eine begrenzte Anzahl unterschiedlicher Typen beim vorliegenden wasserdichten Gehäuse vorgehalten werden müssen. Weiterhin ist ein Austausch der Folie auch wegen ihrer besonderen UV-Beständigkeit, Kratzfestigkeit bzw. geringen Alterungserscheinungen nicht notwendig, so dass eine dauerhafte und zuverlässige Verbindung der Folie mit dem zugeordneten Gehäuseteil vorgesehen werden kann und das Risiko einer falsch oder mit Verschmutzung vom Benutzer eingelegten Folie vermieden wird.

Vorteilhafterweise sollte ferner zumindest ein Teilbereich des transparenten Bereichs eine geringere Dicke als jeweils angrenzende Gehäusebereiche aufweisen. Dieser Teilbereich geringerer Dicke ist zweckmäßigerweise gemäß einer Ausführungsform der Erfindung so angeordnet, dass Aufnahmen mit der Kamera des in das Gehäuse eingesetzten Mobiltelefons durch diesen Teilbereich geringerer Dicke erfolgen. Die Anordnung sollte insbesondere so erfolgen, dass der Teilbereich geringerer Dicke einem Linsenbereich der Kamera zugeordnet ist, vorzugsweise diesen überdeckt. Eine Ausführungsvariante sieht ferner vor, dass die Dicke des Teilbereichs geringerer Dicke etwa der Hälfte der Dicke angrenzender Gehäusebereiche entspricht. Alternativ oder additiv kann die Dicke des Teilbereichs geringerer Dicke zwischen 0,2 und 2,0 mm, insbesondere zwischen 0,5 und 1,5 mm, vorzugsweise bei etwa 1,0 mm liegen, und/oder die Dicke angrenzender Gehäusebereiche zwischen 1,0 und 4,0 mm, insbesondere zwischen 1,5 und 2,5 mm, vorzugsweise bei etwa 2,0 mm.

Die verhältnismäßig dünne Ausbildung des Gehäuses im Bereich der Kameralinse ermöglicht qualitativ hochwertige Aufnahmen. Das Gehäuse ist zur Gewährleistung einer ausreichenden Stabilität in der Regel so dick ausgebildet, dass beispielsweise aufgrund von optischen Verzerrungen oder aufgrund von reduzierter Lichtdurchlässigkeit keine qualitativ einwandfreien Aufnahmen durch das Gehäuse hindurch möglich sind. Eine vollständige Reduzierung der Gehäusestärke würde allerdings die Gehäusestabilität beeinträchtigen. Um beides zu ermöglichen, d.h. ausreichende Stabilität und hochwertige Aufnahmen, wird daher die Gehäusedicke im Linsenbereich des Mobiltelefons gegenüber umgebenden Gehäusebereichen reduziert. Die vorstehend dargelegten Weiterbildungen der Erfindung gewährleisten somit eine hohe Qualität der mit dem in das Gehäuse eingesetzten Mobiltelefon angefertigten Aufnahmen.

Eine bevorzugte und besonders vorteilhafte Weiterbildung sieht vor, dass das transparente und/oder elastischen Material hitzebeständig und/oder UV-beständig und/oder salzwasserresistent und/oder alterungsbeständig und/oder kratzfest ist.

Eine zweckmäßige Weiterbildung sieht vor, dass das transparente und/oder elastische Material getragen ist von einer oder mehreren, vorzugsweise zwei, aus festem Material, insbesondere Kunststoff, gebildeten Komponenten des jeweiligen Gehäuseteils, insbesondere mit dieser oder diesen Komponenten durch eine Schweißung, vorzugsweise Kunststoffschweißung, und/oder Klebeverbindung und/oder Klemmverbindung und/oder formschlüssige Verbindung und/oder kraftschlüssige Verbindung fest und/oder wasserdicht verbunden ist. Dadurch ist das transparente und/oder elastische Material, insbesondere die Folie, dauerhaft und/oder stabil und/oder wasserdicht im Gehäuseteil und damit im Gehäuse insgesamt verankert.

Hierzu ist ferner von Vorteil, wenn
a) das transparente und/oder elastische Material eine oder mehrere, insbesondere an jeder Seite zwei, umlaufende Verdickungen oder Rippen umfasst, vorzugsweise an oder nahe an einem Rand des transparenten und/oder elastischen Materials, und
b) die Komponente oder die Komponenten des Gehäuseteils jeweils eine oder mehrere, insbesondere zwei, Ausnehmungen oder Nuten zur Aufnahme der Verdickung(en) oder Rippe(n) des transparenten und/oder elastischen Materials aufweisen.

Ergänzend kann vorgesehen sein, dass über die in die Ausnehmungen oder Nuten eingreifenden Verdickungen oder Rippen eine form- und/oder kraftschlüssige Verbindung zwischen dem transparenten und/oder elastischen Material und den Komponenten des Gehäuseteils ausgebildet ist.

Bevorzugt und zweckmäßig ist, wenn die Verdickungen oder Rippen einstückig mit dem transparenten und/oder elastischen Material ausgebildet sind.

Eine besonders gute Integration bzw. Befestigung des transparenten und/oder elastischen Materials, insbesondere der Folie, im Gehäuse lässt sich erreichen, indem das transparente und/oder elastische Material im Gehäuseteil verankert ist durch eine Klemmung zwischen mindestens zwei Komponenten des Gehäuseteils.

Bevorzugt und zweckmäßig ist auch, dass das transparente und/oder elastische Material so im Gehäuse angeordnet ist, dass ein Tastenbereich und/oder ein Anzeigebereich des in das Gehäuse eingesetzten Mobiltelefons vom transparenten und/oder elastischen Material überdeckt, insbesondere überspannt, wird, insbesondere die Tasten über das transparente und/oder elastische Material bedienbar und/oder die Anzeige durch das transparente und/oder elastische Material sichtbar ist.

Eine zweckmäßige Ausführungsform des Gehäuses gemäß der Erfindung sieht vor, dass erstes Gehäuseteil und/oder zweites Gehäuseteil zumindest bereichsweise fest ausgebildet sind, insbesondere zumindest bereichsweise ein im Wesentlichen nicht verformbares Material, vorzugsweise einen salzwasserresistenten und/oder splitterfreien und/oder transparenten Kunststoff, insbesondere Polycarbonat und/oder ein Polycarbonat-Blend, umfassen, vorzugsweise daraus besehen. Dies gewährleistet Schutz vor mechanischen Einwirkungen und sorgt für eine ausreichende Stabilität des Gehäuses.

Gemäß einer bevorzugten und zweckmäßigen Ausführungsvariante umfasst die wasserdichte Verbindung zwischen erstem Gehäuseteil und zweitem Gehäuseteil eine Dichtung, insbesondere eine Gummidichtung. Alternativ oder additiv können erstes Gehäuseteil und zweites Gehäuseteil in einem verbundenen Zustand zumindest teilweise formschlüssig ineinander greifen.

Dadurch wird die Verbindung stabil und dauerhaft wasserdicht ausgebildet. Insbesondere ist Dichtheit nicht nur gegenüber Spritzwasser, sondern auch bei Einsatz unter Wasser gewährleistet, d.h. auch dann, wenn das Gehäuse ständigem Wasserdruck ausgesetzt ist.

Auch ist es möglich, dass die wasserdichte Verbindung zwischen erstem Gehäuseteil und zweitem Gehäuseteil durch eine lösbare Schließeinrichtung, insbesondere mindestens eine, vorzugsweise zwei, Verschlussspangen an einem Gehäuseteil, die mit entsprechenden Haken am anderen Gehäuseteil zusammenwirken, hergestellt oder herstellbar ist.

Diese Ausführungsform stellt sicher, dass das Mobiltelefon problemlos und einfach in das Gehäuse eingebracht und auch wieder herausgenommen werden kann, und zwar beliebig oft. Das Gehäuse insgesamt ist demnach öffenbar und schließbar ausgebildet. Durch das Schließen wird die wasserdichte Verbindung zwischen den Gehäuseteilen ausgebildet und gesichert, beispielsweise durch die Verschlussspangen.

Für einen Benutzer besonders zweckmäßig ist, wenn am ersten Gehäuseteil und/oder am zweiten Gehäuseteil mindestens eine Einrichtung zum Anbringen eines Trageriemens, insbesondere eine Befestigungslasche, vorgesehen ist. Dies hat den Vorteil, dass das Gehäuse und damit auch das in das Gehäuse eingesetzte Mobiltelefon auf einfache Weise mitgeführt werden kann, beispielsweise durch Umhängen oder Anbringen an einen Gürtel.

Eine spezielle Ausführungsvariante des Gehäuses gemäß der Erfindung ist ausgebildet für die Aufnahme eines mit einer Kamera ausgerüsteten Mobiltelefons, das an einer Oberseite eine Anzeige und einen Tastenblock aufweist und an einer der Oberseite gegenüberliegenden Unterseite eine Linse der Kamera aufweist. Bei dieser Ausführungsvariante ist vorgesehen, dass das erste Gehäuseteil die Oberseite des eingesetzten Mobiltelefons überdeckt und ein die Anzeige und/oder den Tastenblock überdeckender Teilbereich des ersten Gehäuseteils aus einem transparenten und/oder elastischen, insbesondere dehnbaren, Material, vorzugsweise einer Folie, besteht. Ferner überdeckt das zweite Gehäuseteil die Unterseite des eingesetzten Mobiltelefons. Zumindest ein Teilbereich des zweiten Gehäuseteils, der die Linse der Kamera überdeckt, ist transparent ausgebildet, insbesondere aus Kunststoff, vorzugsweise Polycarbonat.

Eine Weiterbildung dieser speziellen Ausführungsvariante sieht vor, dass das transparente und/oder elastische Material des erste Gehäuseteils die gesamte Oberseite des eingesetzten Mobiltelefons überdeckt, wobei das Material getragen wird von einem fest ausgebildeten, insbesondere im Wesentlichen aus Kunststoff bestehenden, Steg und/oder Rahmenelement des ersten Gehäuseteils.

Auch kann vorgesehen sein, dass der die Linse überdeckende Teilbereich des zweiten Gehäuseteils eine geringere Dicke als angrenzende Gehäusebereiche oder das restliche zweite Gehäuseteil aufweist. Dabei kann der die Linse überdeckende Teilbereich geringerer Dicke in etwa 5 bis 50 Prozent, vorzugsweise 30 bis 45 Prozent, insbesondere etwa 40 Prozent, eines Bodens des zweiten Gehäuseteils umfasst.

Gemäß einer weiteren speziellen Ausführungsvariante ist das Gehäuse gemäß der Erfindung ausgebildet für die Aufnahme eines mit einer Kamera ausgerüsteten Mobiltelefons, das an einer Oberseite eine Anzeige und einen Tastenblock und eine Linse der Kamera aufweist. Hierbei überdeckt das erste Gehäuseteil die Oberseite des eingesetzten Mobiltelefons, ein den Tastenblock und/oder zumindest teilweise die Anzeige überdeckender Teilbereich des ersten Gehäuseteils besteht aus einem transparenten und/oder elastischen, insbesondere dehnbaren, Material, vorzugsweise einer Folie, und ein die Linse der Kamera und/oder zumindest teilweise die Anzeige überdeckender Teilbereich des ersten Gehäuseteils ist aus einem festen und transparenten Material, insbesondere Kunststoff, vorzugsweise Polycarbonat, gebildet.

Ferner kann das Gehäuses gemäß der Erfindung ausgebildet sein für die Aufnahme eines mit einer Kamera ausgerüstetes Mobiltelefon, das über ein Gelenk, insbesondere ein Scharnier, zusammenklappbar ausgebildet ist. Das Gehäuse weist dabei zweckmäßiger Weise eine dem Mobiltelefon in seinem ausgeklappten Zustand angepasste Kontur auf, kann insbesondere selbst mit einem Knick oder einer vorbestimmten Krümmungskontur versehen sein. In diesem Fall ist im Bereich des Gelenks des in das Gehäuse eingesetzten Mobiltelefon ein Einleger, insbesondere ein fest ausgebildeter, vorzugsweise im Wesentlichen nicht verformbarer Einleger, angeordnet oder anordenbar. Dadurch wird das Gelenk vor Überbeanspruchung geschützt. Ein derartiger Einleger ist insbesondere dann wichtig, wenn große Bereiche der Oberseite bzw. die gesamte Oberseite des Mobiltelefons von einer elastischen Folie des Gehäuses überspannt werden. In diesem Fall sorgt der Einleger für die erforderliche Stabilität des Gehäuses im Gelenkbereich des eingesetzten Mobiltelefons und verhindert dadurch die Beschädigung des Gelenks.

Zweckmäßig ist bei dem Gehäuse gemäß der Erfindung auch, wenn das in das Gehäuse eingesetzte Mobiltelefon durch Formschluss mit dem Gehäuse im Gehäuse fixiert oder fixierbar ist und/oder Mittel zum Fixieren des Mobiltelefons im Gehäuse, insbesondere Federn und/oder elastische Materialien, vorgesehen sind. Dies hat den Vorteil einer sicheren Bedienbarkeit des Mobiltelefons und schützt gleichzeitig das Telefon vor Beschädigungen durch fortwährendes Hin- und Herrutschen im Gehäuse.

Sinnvoll ist ferner, wenn das Gehäuse ausgebildet und geeignet ist für die Aufnahme verschiedener Mobiltelefon-Modelle. Dies stellt die Flexibilität des Benutzers sicher. Er kann das Gehäuse für verschiedene Mobiltelefone nutzen und muss sich nicht für jedes Telefon ein neues Gehäuse anschaffen. Außerdem wird dadurch eine kostengünstige Herstellung und ein einfacher und damit ebenfalls kostengünstiger Vertrieb ermöglicht, da nicht zahlreiche und fortlaufend an aktuelle Modelle angepasste Gehäuse hergestellt und nebeneinander im Handel angeboten werden müssen.

Das Mobiltelefon-Set gemäß Anspruch 24 umfasst
a) ein mit einer Kamera ausgerüstetes Mobiltelefon und
b) ein Gehäuses nach einem der vorhergehenden Ansprüche,
c) wobei das Gehäuse dem Benutzer das Telefonieren und/oder das Fotografieren und/oder das Filmen und/oder das Weiterleiten von Fotos und/oder Filmen unter Wasser oder im Wasser ermöglicht.

Eine Weiterbildung dieses Mobilfunk-Sets sieht vor, dass das Mobilfunkt-Set zusätzlich ein wasserfestes Head-Set umfasst, das wiederum einen Kopfhörer, insbesondere ausgebildet als Ohrstöpsel, und/oder ein Mikrofon umfasst, wobei eine drahtlose Übertragung, insbesondere eine Unterwasser-Übertragung, zwischen Mobiltelefon und Head-Set vorgesehen ist, insbesondere nach dem Bluetooth-Standard und/oder mittels Funkübertragung und/oder Infrarotstrahlung und/oder Ultraschall. Das Head-Set in Verbindung mit dem Gehäuse und einer drahtlosen Übertragung ermöglicht dem Benutzer auch das Telefonieren unter Wasser. Alternativ wäre auch eine Kabelverbindung zwischen Head-Set und Mobiltelefon denkbar. In diesem Fall müssten am Gehäuse wasserdichte Durchführungen für das Kabel bzw. einen Stecker ausgebildet sein. Für einen Betrieb ohne Kabel müssten diese Durchführungen mit passenden Stöpseln wasserdicht verschlossen werden.

Insgesamt wird mit dieser Erfindung ein Unterwassergehäuse für mit einer Kamera ausgerüstete Mobiltelefone geschaffen, das es dem Benutzer ermöglicht, die gesamte Steuerung des Mobiltelefons oder zumindest die Steuerung der für das Telefonieren und/oder Senden bzw. Empfangen von Kurz-/Bild-/Videomitteilungen und/oder Aufnehmen von Fotos bzw. Videos wesentlichen Funktionen auch unter oder im Wasser bequem und problemlos vorzunehmen. Besonderes Augenmerk wird hierbei auf die Funktion und Steuerung der integrierten bzw. angebauten Kamera zur Aufnahme von Fotos und/oder Videos unter Wasser gelegt. Mit dem erfindungsgemäßen Unterwassergehäuse für Mobiltelefone kann somit jeder Anwender Unterwasseraufnahmen mit seinem eigenen Mobiltelefon vornehmen und diese gegebenenfalls auch als Bild- bzw. Videonachricht weiterleiten. Vorzugsweise ist das Gehäuse so ausgebildet, dass es mit verschiedensten Mobiltelefon-Modellen verwendet werden kann und nicht modellabhängig ist. Selbstverständlich ist das Gehäuse gemäß der Erfindung auch geeignet für Mobiltelefone, die nicht mit einer Kamera ausgerüstet sind. Der transparente Bereich kann dann beispielsweise als Sichtfenster für die Anzeige und/oder den Tatenblock des Mobiltelefons dienen.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Dabei zeigt
- FIG 1: schematisch eine Draufsicht auf ein zweites Gehäuseteil eines ersten Ausführungsbeispiels eines Gehäuses gemäß der Erfindung, und zwar auf einen geöffneten Innenraum,
- FIG 2: schematisch eine perspektivische Seitenansicht eines ersten, dem in FIG 1 dargestellten zweiten Gehäuseteil zugeordneten, Gehäuseteils des ersten Ausführungsbeispiels eines Gehäuses gemäß der Erfindung,
- FIG 3: eine perspektivische Schnittdarstellung eines zweiten Ausführungsbeispiels eines Gehäuses gemäß der Erfindung, mit eingesetztem Mobiltelefon,
- FIG 4: eine perspektivische Schnittdarstellung eines als Gehäuseoberteil ausgebildeten ersten Gehäuseteils des Gehäuses gemäß FIG 3,
- FIG 5: eine perspektivische Schnittdarstellung eines als Gehäuseunterteil ausgebildeten zweiten Gehäuseteils des Gehäuses gemäß FIG 3,
- FIG 6: in einer dreidimensionalen Explosionszeichnung alle Einzelkomponenten des Gehäuses gemäß FIG 3,
- FIG 7: eine perspektivische Darstellung eines dritten Ausführungsbeispiels eines Gehäuses gemäß der Erfindung, mit eingesetztem Mobiltelefon,
- FIG 8: eine perspektivische Darstellung des Gehäuses gemäß FIG 7 ohne eingesetztes Mobiltelefon, allerdings mit einer Aufschrift,
- FIG 9: eine perspektivische Schnittdarstellung des Gehäuses gemäß FIG 8, bei einem Schnitt entlang der Linie A-A in FIG 8,
- FIG 10: eine vergrößerte Darstellung eines Randbereichs aus FIG 9,
- FIG 11: eine perspektivische Schnittdarstellung des Gehäuses gemäß FIG 8, bei einem Schnitt entlang der Linie B-B in FIG 8,
- FIG 12: eine vergrößerte Darstellung eines Randbereichs aus FIG 11, bei leicht gedrehter Perspektive,
- FIG 13: in einer dreidimensionalen Explosionszeichnung alle Einzelkomponenten des Gehäuses gemäß FIG 8, bei einem Schnitt entlang der Linie A-A in FIG 8 (vgl. hierzu die Darstellung in FIG 9), und
- FIG 14: in einer dreidimensionalen Explosionszeichnung alle Einzelkomponenten des Gehäuses gemäß FIG 8, bei einem Schnitt entlang der Linie B-B in FIG 8 (vgl. hierzu die Darstellung in FIG 11).

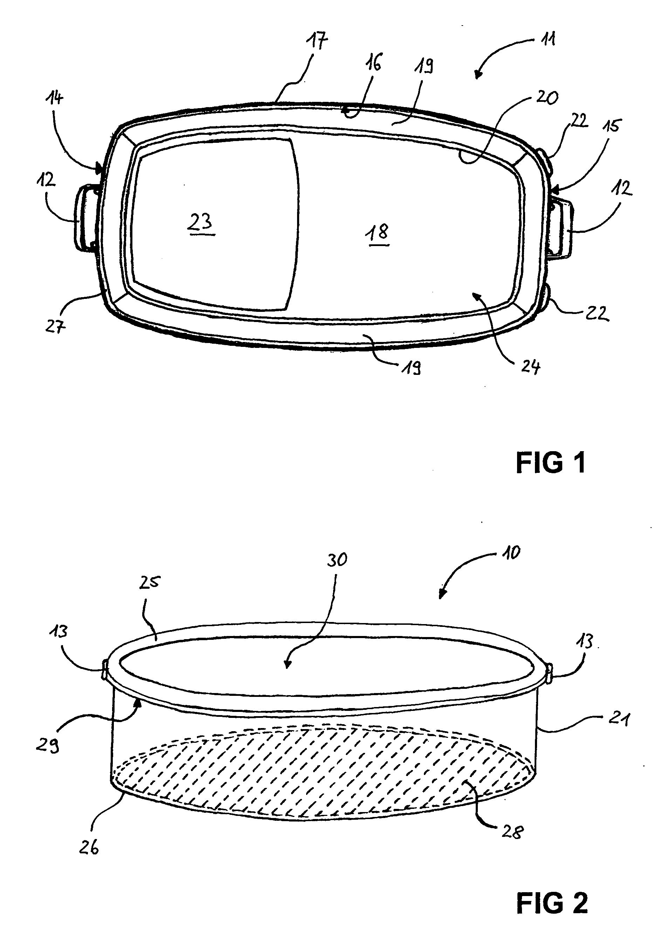

FIG 1 und FIG 2 zeigen ein (in seiner Gesamtheit nicht dargestelltes) erstes Ausführungsbeispiel eines Gehäuses gemäß der Erfindung, das als Unterwassergehäuse ausgebildet ist. Es umfasst ein erstes Gehäuseteil 10, das in FIG 2 dargestellt ist, und ein zweites Gehäuseteil 11, das in FIG 1 dargestellt ist. Dieses Gehäuse ist geeignet für die Aufnahme eines mit einer Kamera ausgerüsteten Mobiltelefons, das an einer Oberseite eine Anzeige und einen Tastenblock und an einer der Oberseite gegenüberliegenden Unterseite eine Linse der Kamera aufweist. Bei diesem Gehäuse ist vorgesehen, dass das erste Gehäuseteil 10 (FIG 2) eine Oberschale bzw. ein Oberteil bildet, die bzw. das die Oberseite des eingesetzten Mobiltelefons überdeckt. Das zweite Gehäuseteil 11 (FIG 1) ist dementsprechend dazu vorgesehen, eine Unterschale bzw. ein Unterteil zu bilden, die bzw. das die Unterseite des eingesetzten Mobiltelefons überdeckt.

Das Gehäuse wird geschlossen durch zusammenfügen des ersten Gehäuseteils 10 mit dem zweiten Gehäuseteil 11. Erste Gehäuseteil 10 und zweites Gehäuseteil 11 sind so ausgebildet, dass sie formschlüssig miteinander verbunden werden können. Im Verbindungsbereich ist ferner eine Gummidichtung 17 (Dichtungsgummi) angeordnet. Dadurch sind beide Gehäuseteile 10, 11 wasserdicht miteinander verbindbar, d.h. durch die Verbindung kann kein Wasser in das Gehäuse eindringen, ein in das Gehäuse eingesetztes Mobiltelefon ist vor Beschädigung durch Wasser geschützt. Zum Herausnehmen des Mobiltelefons kann das Gehäuse durch Lösen der Gehäuseteile 10, 11 voneinander wieder geöffnet werden.

Die Verbindung zwischen erstem Gehäuseteil 10 und zweitem Gehäuseteil 11 wird gesichert durch zwei Verschlussspangen 12, die am zweiten Gehäuseteil 11 angebracht sind und mit Haken 13 am ersten Gehäuseteil 10 zusammenwirken. Dadurch werden erstes Gehäuseteil 10 und zweites Gehäuseteil 11 fest über die Gummidichtung 17 aneinandergedrückt.

Insgesamt umfasst das dargestellte Ausführungsbeispiel eines Unterwassergehäuses somit das Oberteil 10 und das Unterteil 11. Die Wasserdichtigkeit des Verschlusses zwischen Oberteil 10 und Unterteil 11 wird mittels der Gummidichtung 17 und zwei Verschlussspangen 12 hergestellt. Als Material für Oberteil 10 und Unterteil 11 kommt beispielsweise ein transparenter, splitterfreier und salzwasserresistenter Kunststoff in Betracht.

FIG 1 zeigt das zweite Gehäuseteil 11 schematisch in einer Draufsicht, und zwar in Blickrichtung auf einen geöffneten Innenraum 24 des zweiten Gehäuseteils 11. In diesen Innenraum 24 wird das Mobiltelefon eingesetzt. Der Innenraum 24 ist begrenzt durch Seitenwände 19 und einen in FIG 1 in die Zeichenebene hinein zurückversetzten Boden 18. Das in FIG 1 dargestellte zweite Gehäuseteil 11 weist an einem Kopfteil 14 (linke Seite in FIG 1) und an einem Fußteil 15 (rechte Seite in FIG 1) jeweils die bereits angesprochenen Verschlussspangen 12 auf.

Eine dem Boden 18 gegenüberliegende Kante der Seitenwände 19 bildet eine Oberkante 27 des zweiten Gehäuseteils 11. Diese Oberkante 27 weist eine Verschlussrille 16 auf, in die die Gummidichtung 17 eingebracht ist.

Am Rand des Bodens 18, in FIG 1 dem Betrachter zugewandt, ist ein umlaufender Falz 20 ausgebildet. Auf diese Weise wird eine Befestigungsrille für einen nachstehend beschriebenen Steg 21 des ersten Gehäuseteils 10 ausgebildet. Beim Zusammenfügen der beiden Gehäuseteile 10, 11 wird der Steg 21 des ersten Gehäuseteils 10 zwischen der Seitenwand 19 und dem Falz 20 des zweiten Gehäuseteils 11 fixiert. Dadurch werden beide Gehäuseteile 10, 11 formschlüssig miteinander verbunden.

In FIG 1 sind ferner zwei an dem zweiten Gehäuseteil 11 angebrachte Laschen 22 zur Befestigung eines Trageriemens dargestellt. Die Laschen 22 sind beidseitig am Fußteil 15 angeordnet, um Rechts- und Linkshändern gerecht zu werden.

Weiter ist in FIG 1 ein Teilbereich 23 des zweiten Gehäuseteils 11 zu erkennen, und zwar in der dem Fußteil 15 des zweiten Gehäuseteils 11 zuordenbaren Hälfte des zweiten Gehäuseteils 11 (in FIG 1 die linke Seite). Dieser Teilbereich 23 bildet einen Abschnitt des Bodens 18 des zweiten Gehäuseteils 11, er umfasst etwa 40 % des Bodens 18. Der Teilbereich 23 ist derart angeordnet, dass beim vorgesehenen Einsetzen des Mobiltelefons in das Gehäuse die Linse der Kamera des Mobiltelefons bzw. ein Linsenbereich des Mobiltelefons dem Teilbereich 23 zugeordnet ist, d.h. von dem Teilbereich 23 überdeckt wird.

Die Dicke des Teilbereichs 23 ist gegenüber der Dicke des restlichen, den Teilbereich 23 umgebenden Bodens 18 zurückgenommen. Dadurch wird die Qualität der mit dem Mobiltelefon angefertigten Aufnahmen gewährleistet.

Das zweite Gehäuseteil 11 (bis auf die Gummidichtung 17) ist fest ausgebildet und besteht aus einem splitterfreien und salzwasserresistenten Kunststoff, vorzugsweise Polycarbonat. Vorzugsweise kann es vollständig aus transparentem Kunststoff bestehen, zumindest jedoch der Teilbereich 23 geringerer Dicke sollte transparent ausgebildet sein, um durch ihn hindurch Aufnahmen mit der Kamera des Mobiltelefons zu ermöglichen.

FIG 2 zeigt schematisch eine perspektivische Seitenansicht des ersten Gehäuseteils 10. Das erste Oberteil 10 umfasst einen Rahmen bzw. Steg 21 (Stegwand) mit einer Oberkante 25 und einer der Oberkante 25 gegenüberliegenden Unterkante 26. Die vom Steg 21 überdeckten Teile des ersten Gehäuseteils 10 sind gestrichelt dargestellt. An der Unterkante 26 des Stegs 11 ist eine transparente, gummiartige und dehnbare Folie 28 (transparente Gummifolie) angebracht, und zwar durch Verschweißung. Die Stärke dieser Folie 28 ist ausreichend gewählt. Dadurch hält sie beispielsweise auch den unter extremen Bedingungen auftretenden Belastungen stand. Steg 21 und Folie 28 begrenzen einen in FIG 2 nach oben hin offenen Hohlraum 30.

An der Oberkante 25 des Stegs 21 ist der Steg 21 verbreitert und bildet dadurch eine der Unterkante 26 zugewandte Anschlagfläche 29 aus. Beim Zusammenfügen der beiden Gehäuseteile 10, 11 wird die Unterkante 26 des Stegs 21 des ersten Gehäuseteils 10 auf die Oberkante 27 des zweiten Gehäuseteils 11 zu bewegt. Dann schiebt sich der Steg 21 beim Zusammenfügen zwischen Seitenwand 19 und Falz 20 des zweiten Gehäuseteils 11, und zwar zusammen mit einem Teil der angeschweißten Folie 28, die dabei in den Hohlraum 30 hinein gedehnt wird. Auf diese Weise wird ein in das Gehäuse eingesetztes Mobiltelefon an seiner Oberseite von der Folie überspannt und damit im Gehäuse fixiert. Die Anzeige des Mobiltelefons ist durch die transparente Folie 28 sichtbar, die Tasten des Mobiltelefons sind durch die Folie 28 bedienbar.

Der Steg 21 des ersten Gehäuseteils 10 wird soweit in das zweite Gehäuseteil 11 hineingeschoben, bis die Anschlagfläche 29 an der in die Verschlussrille 16 des zweiten Gehäuseteils 11 eingebrachten Gummidichtung 17 anliegt. Die Anschlagfläche 29 bildet somit eine Verschlusskante des ersten Gehäuseteils 10. Der Verschluss des Gehäuses, d.h. die Sicherung der Verbindung zwischen den Gehäuseteilen 10, 11, erfolgt durch Zusammenwirken der Verschlussspangen 12 des zweiten Gehäuseteils 11 mit den Verschlusshaken 13 des ersten Gehäuseteils. Dabei werden die Anschlagfläche 29 an der Oberkante 25 des Stegs 21 des ersten Gehäuseteils 10 und ein Bereich der bzw. um die Verschlussrille 16 des zweiten Gehäuseteils 11 gegeneinander und damit gegen die nunmehr zwischen ihnen angeordnete Gummidichtung 17 gedrückt. Dabei garantiert die Gummidichtung 17 einen wasserdichten Verschluss.

Nachfolgend wird die Funktion des dargestellten Unterwassergehäuses erläutert. Zunächst wird das Mobiltelefon mit seiner Rückseite, an der die Linse der integrierten oder angebauten Kamera angeordnet ist, so in das zweite Gehäuseteil 11 (Unterteil) gelegt, dass die Linse auf dem Teilbereich 23 geringerer Dicke, d.h. der verdünnten Kunststofffläche, aufliegt bzw. von dieser überdeckt wird. Anschließend wird das erste Gehäuseteil 10 (Oberteil) aufgesetzt und mit den Verschlussspangen 12 verschlossen. Dabei legt sich der Stegs 21 mit der verschweißten Folie 28 zwischen Falz 20 und Seitenwand 19 (Wandung) des zweiten Gehäuseteils 11 (Unterteil). Die Folie spannt sich dabei über das Mobiltelefon. Das Mobiltelefon ist somit fixiert. Durch die transparente und gummiartige Folie ist das Display des Mobiltelefons lesbar. Ferner ist durch die transparente und gummiartige Folie die Bedienung der Tastatur des Mobiltelefons problemlos möglich.

Durch die Flexibilität der Folie ist die Verwendung für verschiedengroße Mobiltelefone möglich. Eine Modellabhängigkeit ist somit nicht gegeben. Durch den Trageriemen für Links- und Rechtshänder ist eine Tragemöglichkeit für jeden Anwender gegeben.

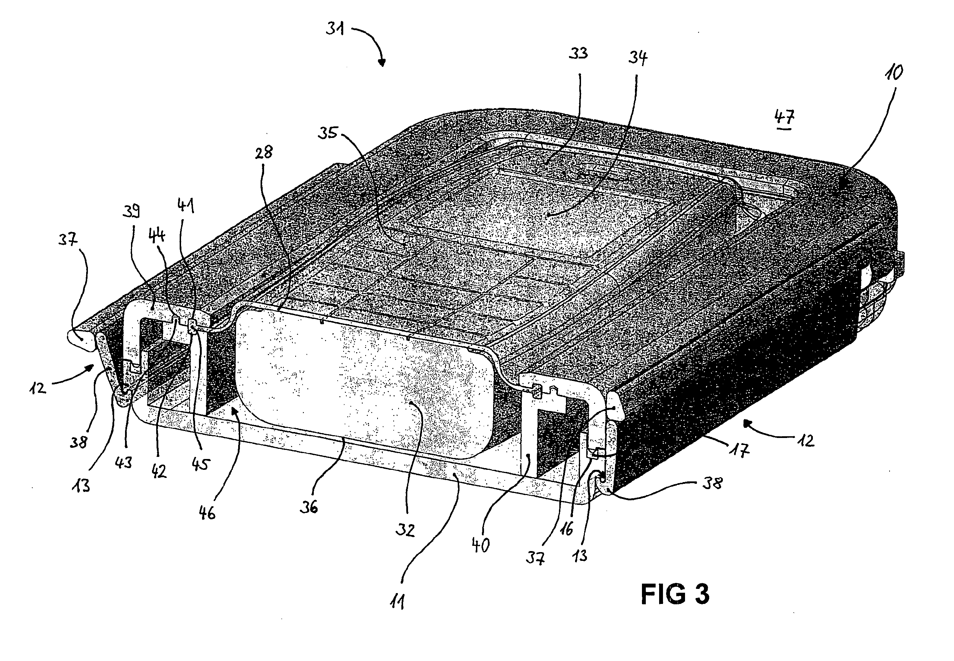

Die FIG 3 bis 6 zeigen ein zweites Ausführungsbeispiel eines Gehäuses 31 gemäß der Erfindung. Dabei werden für vergleichbare Teile bzw. Komponenten die gleichen Bezugszeichen wie beim ersten Ausführungsbeispiel (FIG 1 und 2) verwendet.

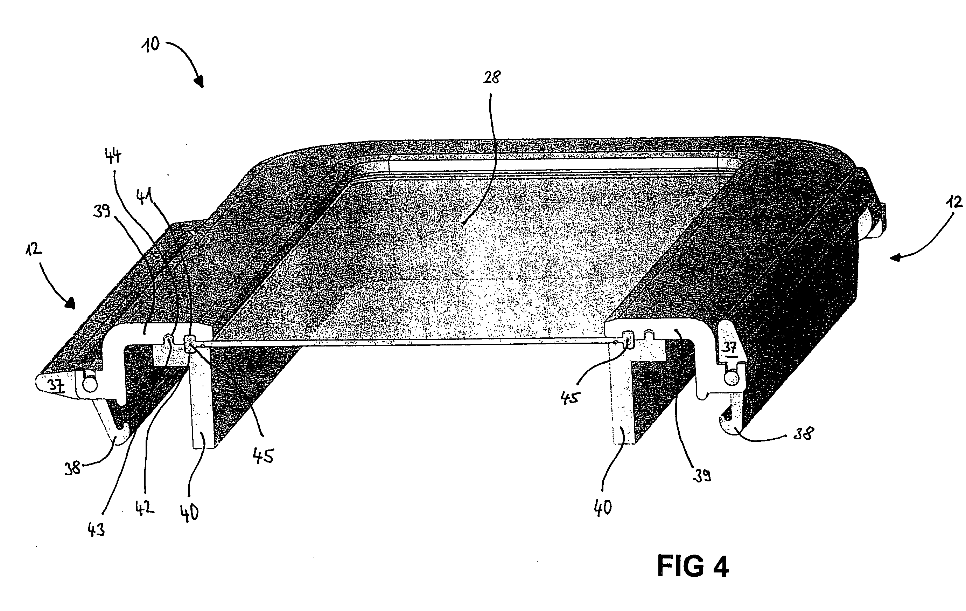

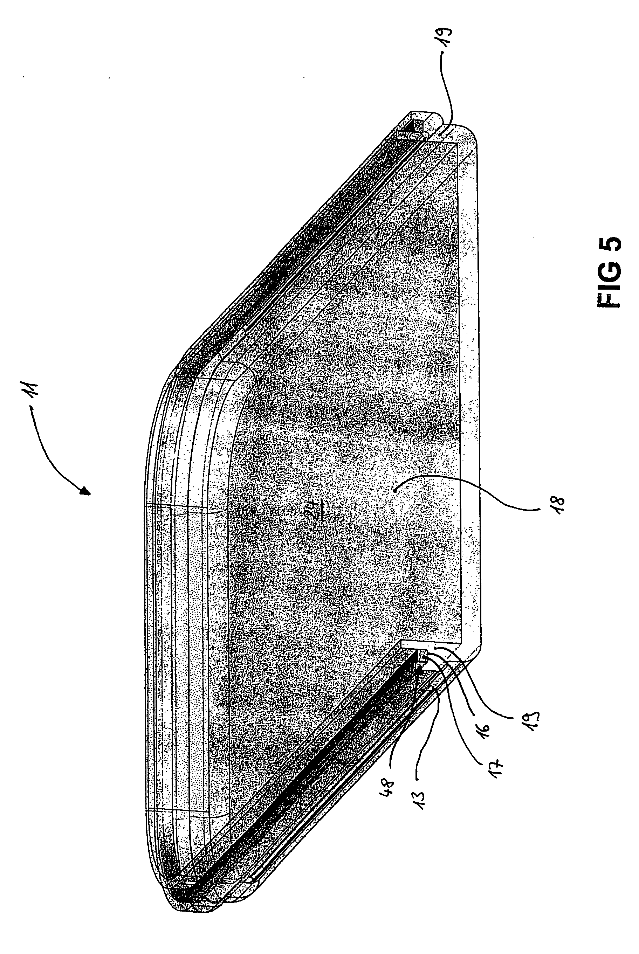

FIG 3 zeigt eine perspektivische Schnittdarstellung des zusammengesetzten Gehäuses 31 mit eingesetztem Mobiltelefon 32. Das Gehäuse 31 umfasst ein erstes Gehäuseteil 10 und ein zweites Gehäuseteil 11. Zur Verdeutlichung sind das erste Gehäuseteil 10 in FIG 4 und das zweite Gehäuseteil 11 in FIG 5 jeweils in Alleinstellung dargestellt, und zwar ebenfalls in einer perspektivischen Schnittansicht. Aus FIG 3 und FIG 4 ist ersichtlich, dass das erste Gehäuseteil 10 aus mehreren Elementen zusammengesetzt ist, die untenstehend näher erläutert werden.

Das Gehäuse 31 ist ausgebildet und bestimmt für die Aufnahme eines mit einer Kamera (nicht dargestellt) ausgerüsteten Mobiltelefons 32, das an einer Oberseite 33 eine Anzeige 34 und einen Tastenblock 35 und an einer der Oberseite 33 gegenüberliegenden Unterseite 36 eine (nicht dargestellte) Linse der Kamera aufweist. Das erste Gehäuseteil 10 bildet eine Oberschale bzw. ein Oberteil, die bzw. das die Oberseite 33 des eingesetzten Mobiltelefons 32 überdeckt. Das zweite Gehäuseteil 11 bildet entsprechend eine Unterschale bzw. ein Unterteil, die bzw. das die Unterseite 36 des eingesetzten Mobiltelefons 32 überdeckt.

Das Gehäuse 31 in FIG 3 ist geschlossen. Das Schließen erfolgt, indem das erste Gehäuseteil 10 mit dem zweiten Gehäuseteil 11 zusammengefügt wird. Dabei sind erste Gehäuseteil 10 und zweites Gehäuseteil 11 so ausgebildet, dass sie formschlüssig miteinander verbunden werden können. Im Verbindungsbereich ist ferner eine Gehäusedichtung 17 angeordnet. Dadurch sind beide Gehäuseteile 10, 11 wasserdicht miteinander verbunden, das in das Gehäuse 31 eingesetzte Mobiltelefon 32 ist vor Beschädigung durch Wasser geschützt. Zum Herausnehmen des Mobiltelefons 32 kann das Gehäuse 31 durch Lösen der Gehäuseteile 10, 11 voneinander wieder geöffnet werden.

Die Verbindung zwischen erstem Gehäuseteil 10 und zweitem Gehäuseteil 11 wird gesichert durch zwei Verschlussspangen 12, die am ersten Gehäuseteil 10 angebracht sind und mit Haken 13 am zweiten Gehäuseteil 11 zusammenwirken. Dadurch werden erstes Gehäuseteil 10 und zweites Gehäuseteil 11 fest über die Gehäusedichtung 17 aneinandergedrückt. Aus FIG 3 und FIG 4 ist ersichtlich, dass die Verschlussspangen 12 jeweils aus zwei drehbeweglich über eine Verrastung miteinander verbundenen Verschlusselementen 37, 38 bestehen. Das Verschlusselement 37 ist drehbeweglich mit dem ersten Gehäuseteil 10 verrastet. Das Verschlusselement 38 greift beim Verschließen des Gehäuses 31 in die Haken 13 des zweiten Gehäuseteils 11 ein. Die in FIG 3 und FIG 4 auf der linken Seite dargestellte Verschlussspange 12 befindet sich in einem gelösten Zustand, die auf der rechten Seite abgebildete Verschlussspange 12 befindet sich in einem gespannten Zustand. Bei der Herstellung werden beispielsweise zunächst die beiden Verschlusselemente 37, 38 miteinander verrastet. Anschließend wird das Verschlusselement 37 im ersten Gehäuseteil, und zwar konkret am Rahmenelement 39 eingerastet (nach der nachfolgend beschriebenen Vormontage des ersten Gehäuseteils 10). Die Verschlusselemente 37, 38 sind eingefärbt und opak ausgebildet. Sie bestehen aus einem harten und zähen Werkstoff, der wärmeformbeständig, medienbeständig, insbesondere gegen Wasser und Salzwasser, spannungsrissbeständig, UV-beständig und witterungsbeständig ist. Ferner sollte der Werkstoff eine geringe Feuchtigkeitsaufnahme und ein gutes Gleit- und Verschleißverhalten aufweisen. Als Werkstoff kommt beispielsweise UV-stabilisiertes Polyacetal (Polyoxymethylen POM) in Betracht. Die Verschlusselemente 37, 38 können gebildet sein durch Kompakt-Spritzguss.

FIG 4 zeigt die Ausbildung und Zusammensetzung des ersten Gehäuseteils 10. Zu erkennen ist ein Rahmenelement 39, an dem das Verschlusselement 37 der Verschlussspange 12 angebracht ist. Weiter ist ein Dichtungsrahmen 40 zu erkennen, der formschlüssig und durch Verschweißung fest mit dem Rahmenelement 39 verbunden ist. Zwischen Rahmenelement 39 und Dichtungsrahmen 40 ist eine transparente, gummiartige und dehnbare Folie 28 (Membrandichtung) angeordnet. Rahmenelement 39, Dichtungsrahmen 40 und Folie 28 sind wasserdicht miteinander verbunden, so dass das erste Gehäuseteil 10 wasserdicht ausgebildet ist.

Zur Herstellung des ersten Gehäuseteils 10 wird zunächst die Folie 28 in eine hierfür vorgesehene Ausnehmung 41 im Rahmenelement 39 eingelegt. Hierauf wird der Dichtungsrahmen 40, der ebenfalls eine Ausnehmung 42 für die Folie aufweist, aufgesetzt. Dabei greift ein am Dichtungsrahmen 40 ausgebildeter Vorsprung 43 zumindest teilweise formschlüssig in eine korrespondierende Ausnehmung 44 im Rahmenelement 39 ein. Rahmenelement 39 und Dichtungsrahmen 40 werden durch eine umlaufende Ultraschallverschweißung, die als Doppel-Quetschnaht ausgeführt ist, fest und dauerhaft miteinander verbunden. Dadurch wird ein Eindringen von Wasser in den Innenraum zwischen Rahmenelement 39 und Dichtungsrahmen 40 verhindert.

Rahmenelement 39 und Dichtungsrahmen 40 bestehen aus eingefärbten, opaken Werkstoffen, um die durch das Ultraschallschweißen entstehende innere Naht zu kaschieren. Ferner weisen die Werkstoffe gute mechanische Eigenschaften auf, d.h. hohe Schlagzähigkeit und Kerbschlagzähigkeit. Weitere wesentliche Eigenschaften sind Wärmeformbeständigkeit, geringe Feuchtigkeitsaufnahme, Medienbeständigkeit, insbesondere gegenüber Wasser und Salzwasser, UV-Beständigkeit und Witterungsbeständigkeit. In Betracht kommt beispielsweise PC+ASA-Blend, d.h. eine Polymermischung aus PC (Polycarbonat) und ASA (Acrylnitril/Styrol/Acrylester). Rahmenelement 39 und Dichtungsrahmen 40 können jeweils durch einen Kompakt-Spritzguss hergestellt sein.

Die Folie 28 (Membrandichtung) bildet eine umlaufende Rippe 45 aus, die in die Ausnehmungen 41, 42 im Rahmenelement 39 bzw. Dichtungsrahmen 40 eingreift. Dadurch wird die Verbindung zwischen Rahmenelement 39 und Dichtungsrahmen 40 abgedichtet. Die Folie 28 überspannt als Spannelement die Oberseite 33 des in das Gehäuse 31 eingesetzten Mobiltelefons 32 (vgl. FIG 3) und fixiert dadurch das Mobiltelefon 32 im Gehäuse 31. Gleichzeitig dichtet die Folie 28 einen Innenraum 46 des Gehäuses 31, in den das Mobiltelefon 32 eingesetzt bzw. einsetzbar ist, gegenüber einem das Gehäuse 31 umgebenden Außenraum 47 wasserdicht ab. Um die Bedienung des Mobiltelefons 32 zu ermöglichen, besteht die Folie aus einem hochtransparenten Werkstoff. Ferner sollte dieser Werkstoff medienbeständig, insbesondere gegenüber Wasser und Salzwasser, sein, als mechanische Eigenschaften insbesondere einen geringen Zug- und Druck-Verformungsrest aufweisen, wärmeform-, UV-, ozon-, alterungs- und wetterbeständig sein sowie leichtfließend (d.h. geringe Folien- bzw. Membrandicke). Als Werkstoff kommt ein Silikon-Kautschuk (Q) in Betracht. Die Herstellung der Folie 28 erfolgt beispielsweise durch Vulkanisation und/oder Spritzguss.

Aufgrund der Transparenz bildet die Folie 28 auch einen transparenten Bereich des ersten Gehäuseteils 10. Sollte ein eingesetztes Mobiltelefon an seiner Oberseite eine Kamera aufweisen, so können durch die Folie 28 hindurch Aufnahmen mit der Kamera angefertigt werden.

FIG 5 zeigt das zweiten Gehäuseteils 11 in einer seitlichen Blickrichtung auf einen geöffneten Innenraum 24 des zweiten Gehäuseteils 11. In diesen Innenraum 24 wird das Mobiltelefon eingesetzt. Der Innenraum 24 ist begrenzt durch Seitenwände 19 und einen Boden 18. Eine dem Boden 18 gegenüberliegende Kante 48 der Seitenwände 19 ist verstärkt und bildet eine Verschlussrille 16 aus, in die die Gehäusedichtung 17 eingelegt ist.

Das zweite Gehäuseteil 11 ist insgesamt transparent ausgelegt. Der Boden 18 ist beidseitig hochglanzpoliert ausgeführt. Dadurch bildet der Boden 18 einen transparenten Bereich des zweiten Gehäuseteils 11, durch den qualitativ hochwertige Aufnahmen mit der Kamera an der Unterseite 36 des Mobiltelefons 32 ermöglicht werden. Die Seitenwände 19 können mit einer Oberflächenstruktur versehen sein. Das zweite Gehäuseteil besteht somit aus einem transparenten Werkstoff, der als mechanische Eigenschaften insbesondere hohe Schlagzähigkeit und Kerbschlagzähigkeit aufweisen sollte. Weitere wesentliche Eigenschaften sind Wärmeformbeständigkeit, geringe Feuchtigkeitsaufnahme, Medienbeständigkeit, insbesondere gegenüber Wasser und Salzwasser, UV-Beständigkeit und Witterungsbeständigkeit. In Betracht kommt beispielsweise UV-stabilisiertes Polycarbonat (PC). Das zweite Gehäuseteil 11 kann durch einen Kompakt-Spritzguss hergestellt sein.

Die Gehäusedichtung 17 dient der Abdichtung der beiden Gehäuseteile 10, 11 zueinander. Sie ist umlaufend in die Verschlussrille 16 des zweiten Gehäuseteils 11 eingelegt. Im geschlossenen Zustand des Gehäuses 31 sind erstes Gehäuseteil 10 und zweites Gehäuseteil 11 gegen die Gehäusedichtung 17 gepresst. Die Gehäusedichtung 17 wird aus eingefärbtem, bevorzugt schwarzem Werkstoff hergestellt. Dieser Werkstoff sollte medienbeständig, insbesondere gegenüber Wasser und Salzwasser, sein, als mechanische Eigenschaft insbesondere einen geringen Druckverformungsrest aufweisen sowie wärmeform-, UV-, ozon-, alterungs- und wetterbeständig sein. Als Werkstoff kommt EPDM-Kautschuk (Terpolymer aus Ethylen, Propylen und einem Dien) in Betracht. Die Herstellung der Gehäusedichtung 17 erfolgt durch Vulkanisation.

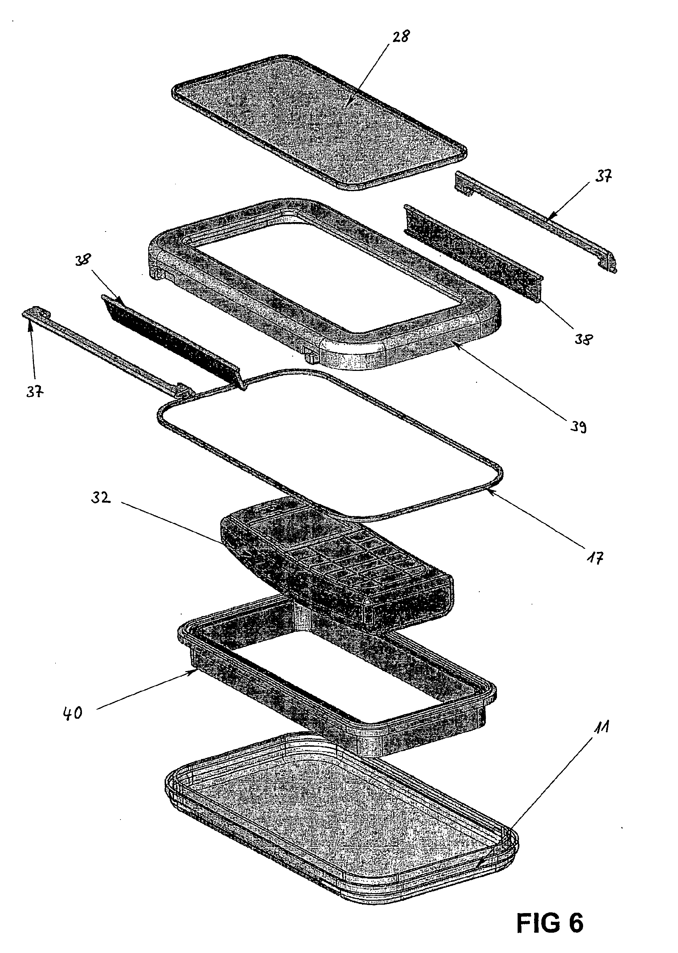

FIG 6 zeigt in einer in einer dreidimensionalen Explosionszeichnung alle Einzelkomponenten des Gehäuses 31. Dargestellt sind als Komponenten des ersten Gehäuseteils 10 die Folie 28, die Verschlusselemente 37, 38, das Rahmenelement 39 und der Dichtungsrahmen 40. Weiter ist zu sehen das zweite Gehäuseteil 11 und die Gehäusedichtung 17. Ferner ist das in das Gehäuse 31 einzubringende Mobiltelefon 32 dargestellt.

Durch die Flexibilität der Folie 28 und eine entsprechende Wahl der Gehäuseabmessungen ist die Verwendung des Gehäuses 31 für verschieden große und/oder unterschiedlich geformte Mobiltelefone 32 möglich. Eine Modellabhängigkeit ist somit nicht gegeben. Insbesondere ermöglicht das Gehäuse 31, da das erste Gehäuseteil 10 (mit der transparenten Folie 28) und das zweite Gehäuseteil 11 jeweils einen transparenten Bereich aufweisen, ein Fotografieren mit der Kamera eines Mobiltelefons sowohl, wenn die Kamera an der Oberseite des Mobiltelefons angeordnet ist, als auch, wenn die Kamera sich an der Unterseite des Mobiltelefons befindet.

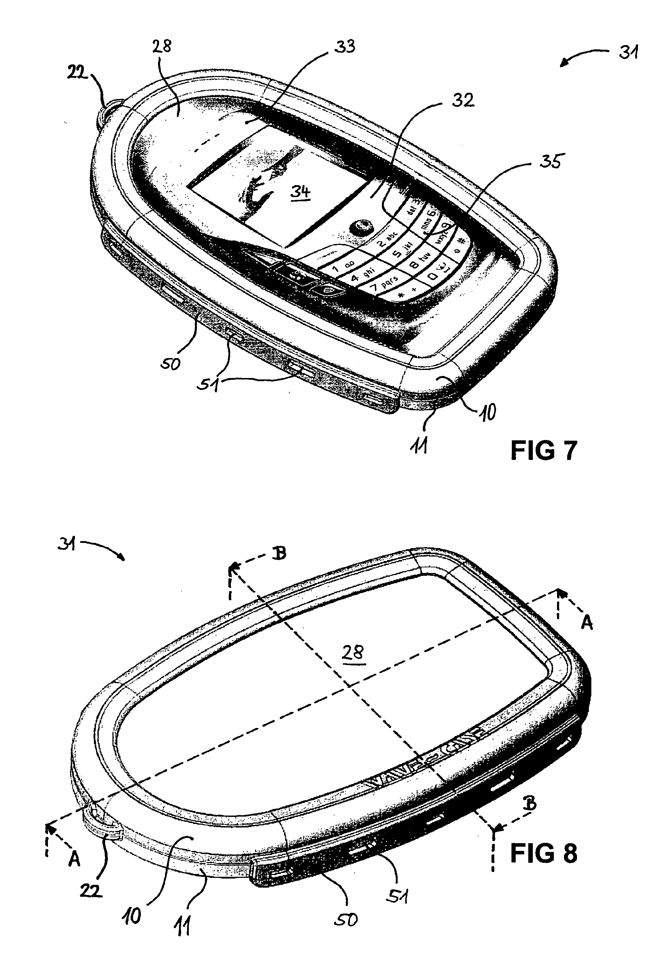

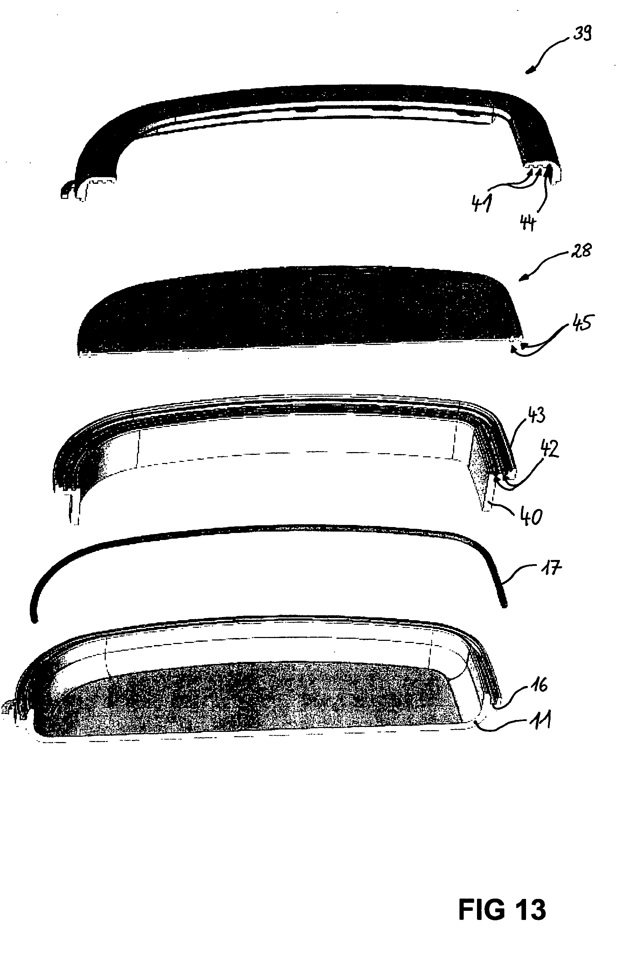

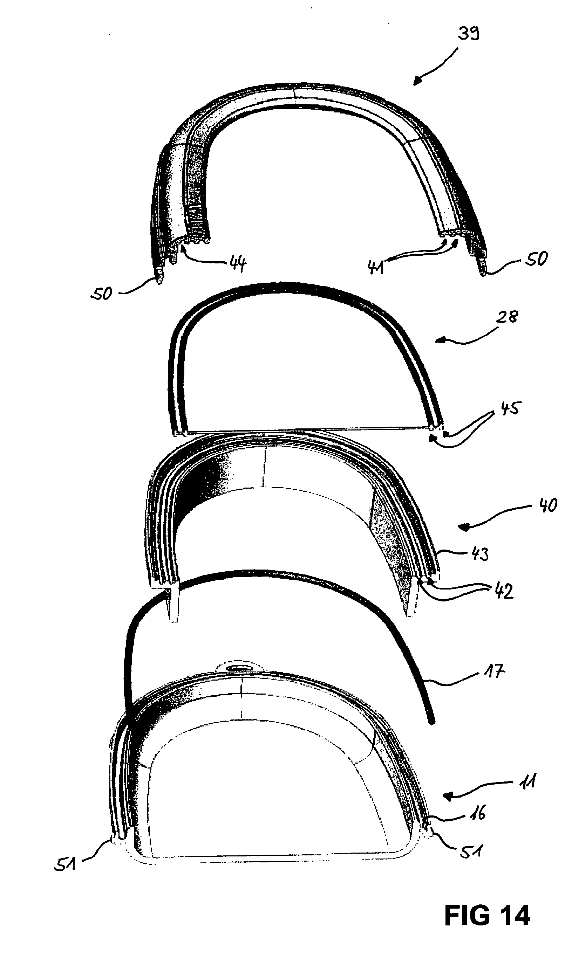

Die FIG 7 bis 14 zeigen ein drittes Ausführungsbeispiel eines Gehäuses 31 gemäß der Erfindung. Dabei werden für vergleichbare Teile bzw. Komponenten die gleichen Bezugszeichen wie beim ersten und beim zweiten Ausführungsbeispiel (FIG 1 und 2 bzw. FIG 3 bis 6) verwendet.

FIG 7 zeigt eine perspektivische Schnittdarstellung des zusammengesetzten Gehäuses 31 mit eingesetztem Mobiltelefon 32. Alle weiteren Figuren zeigen das Gehäuse ohne eingesetztes Mobiltelefon. Das Gehäuse 31 umfasst ein erstes Gehäuseteil 10 und ein zweites Gehäuseteil 11. Das Gehäuse 31 ist ausgebildet und bestimmt für die Aufnahme eines mit einer Kamera ausgerüsteten Mobiltelefons 32. Im dargestellten Beispiel weist das Mobiltelefon 32 an einer Oberseite 33 eine Anzeige 34 und einen Tastenblock 35 auf. Eine Linse (nicht dargestellt) einer Kamera des Mobiltelefons 32 ist an einer der Oberseite 33 gegenüberliegenden Unterseite des Mobiltelefons 32 angeordnet. Das Gehäuse ist aber auch geeignet für die Aufnahme eines Mobiltelefons, bei dem die Linse der Kamera an der Oberseite 33 angeordnet ist. Selbstverständlich können auch Mobiltelefone ohne Kamera in das Gehäuse eingesetzt werden. Das erste Gehäuseteil 10 bildet eine Oberschale bzw. ein Oberteil, die bzw. das die Oberseite 33 des eingesetzten Mobiltelefons 32 überdeckt. Das zweite Gehäuseteil 11 bildet entsprechend eine Unterschale bzw. ein Unterteil, die bzw. das die Unterseite 36 des eingesetzten Mobiltelefons 32 überdeckt. Eine Lasche 22 dienst beispielsweise dazu, einen Trageriemen am Gehäuse anzubringen.

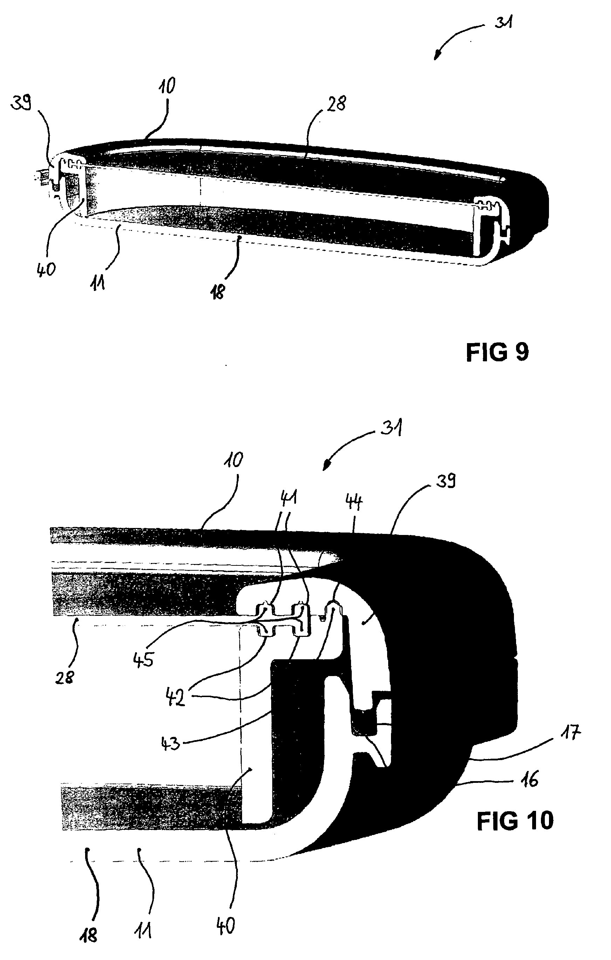

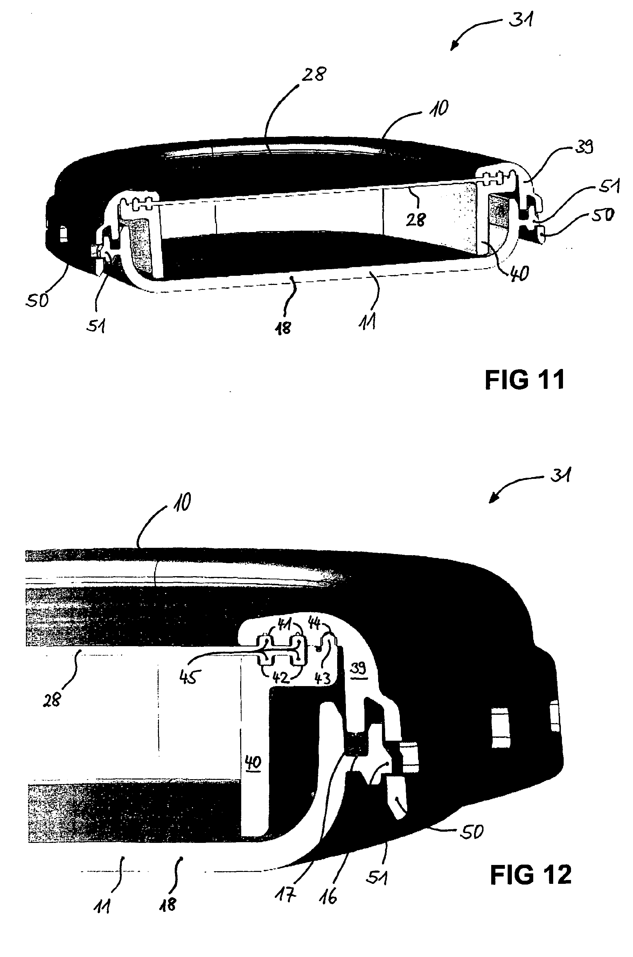

Das Gehäuse 31 ist in FIG 7 bis FIG 12 geschlossen dargestellt. Das Schließen erfolgt, indem das erste Gehäuseteil 10 mit dem zweiten Gehäuseteil 11 zusammengefügt wird. Dabei sind erste Gehäuseteil 10 und zweites Gehäuseteil 11 so ausgebildet, dass sie formschlüssig miteinander verbunden werden können. Im Verbindungsbereich ist ferner eine Gehäusedichtung 17 (vgl. FIG 10 und FIG 12) angeordnet. Dadurch sind beide Gehäuseteile 10, 11 wasserdicht miteinander verbunden, ein in das Gehäuse 31 eingesetztes Mobiltelefon 32 ist vor Beschädigung, beispielsweise durch Wasser, geschützt. Zum Herausnehmen eines eingesetzten Mobiltelefons 32 kann das Gehäuse 31 durch Lösen der Gehäuseteile 10, 11 voneinander wieder geöffnet werden.

Die Verbindung zwischen erstem Gehäuseteil 10 und zweitem Gehäuseteil 11 wird gehalten bzw. gesichert durch miteinander korrespondierende Verschlusselemente 50, 51, wobei Verschlusselement 51, das am zweiten Gehäuseteil 11 ausgebildet ist, eine Rastnase ist, die zum Schließen des Gehäuses 31 in eine korrespondierende Ausnehmung des Verschlusselements 50, das am ersten Gehäuseteil 10 ausgebildet ist, eingreift. Hierzu ist das Verschlusselement 50 aufbiegbar am ersten Gehäuseteil 10 angebracht. Im geschlossenen Zustand des Gehäuses 31 werden erstes Gehäuseteil 10 und zweites Gehäuseteil 11 fest über die Gehäusedichtung 17 aneinandergedrückt. Die Verschlusselemente 50, 51 sind vorzugsweise einstückig mit dem jeweiligen Gehäuseteil 10 bzw. 11 ausgebildet. Hinsichtlich der Materialien sei beispielhaft auf die vorstehenden Ausführungen hinsichtlich des zweiten Ausführungsbeispiels verwiesen.

Aus FIG 9 bis FIG 14 ist ersichtlich, dass das erste Gehäuseteil 10 aus mehreren Elementen zusammengesetzt ist. Zu erkennen ist ein Rahmenelement 39, an dem das Verschlusselement 50 angeformt ist. Weiter ist ein Dichtungsrahmen 40 zu erkennen. Dieser kann beispielsweise formschlüssig und/oder durch Verschweißung fest mit dem Rahmenelement 39 verbunden sein. Zwischen Rahmenelement 39 und Dichtungsrahmen 40 ist eine transparente, gummiartige und dehnbare Folie 28 (Membrandichtung) angeordnet. Rahmenelement 39, Dichtungsrahmen 40 und Folie 28 sind wasserdicht miteinander verbunden, so dass das erste Gehäuseteil 10 wasserdicht ausgebildet ist.

Aufgrund der Transparenz bildet die Folie 28 einen transparenten Bereich des ersten Gehäuseteils 10. Sofern das eingesetzte Mobiltelefon an seiner Oberseite eine Kamera aufweisen, können durch die Folie 28 hindurch Aufnahmen mit der Kamera angefertigt werden.

Die Folie 28 (Membrandichtung) bildet mehrere umlaufende Verdickungen bzw. Rippen 45 aus, die in korrespondierende Ausnehmungen 41, 42 im Rahmenelement 39 bzw. Dichtungsrahmen 40 eingreifen. Dadurch wird die Verbindung zwischen Rahmenelement 39 und Dichtungsrahmen 40 abgedichtet. Die Folie 28 kann als Spannelement die Oberseite 33 eines in das Gehäuse 31 eingesetzten Mobiltelefons 32 überspannen (vgl. FIG 7) und dadurch das Mobiltelefon 32 im Gehäuse 31 fixieren. Gleichzeitig dichtet die Folie 28 einen Innenraum des Gehäuses 31, in den das Mobiltelefon 32 eingesetzt bzw. einsetzbar ist, gegenüber einem das Gehäuse 31 umgebenden Außenraum wasserdicht ab. Um die Bedienung des Mobiltelefons 32 zu ermöglichen, besteht die Folie 28 aus einem hochtransparenten Werkstoff. Ferner sollte dieser Werkstoff medienbeständig, insbesondere gegenüber Wasser und Salzwasser, sein, als mechanische Eigenschaften insbesondere einen geringen Zug- und Druck-Verformungsrest aufweisen, wärmeform-, UV-, ozon-, alterungs- und wetterbeständig sein sowie leichtfließend (d.h. geringe Folien- bzw. Membrandicke). Als Werkstoff kommt ein Silikon-Kautschuk (Q) in Betracht. Die Herstellung der Folie 28 erfolgt beispielsweise durch Vulkanisation und/oder Spritzguss.

Zur Herstellung des ersten Gehäuseteils 10 werden zunächst die Rippen 45 der Folie 28 in die hierfür vorgesehene Ausnehmungen 41 im Rahmenelement 39 eingelegt. Hierauf wird der Dichtungsrahmen 40 aufgesetzt, wobei die Rippen 45 der Folie in die hierfür vorgesehenen Ausnehmung 42 eingreifen. Unter anderem für die exakte Positionierung greift dabei ein am Dichtungsrahmen 40 ausgebildeter Vorsprung 43 zumindest teilweise formschlüssig in eine korrespondierende Ausnehmung 44 im Rahmenelement 39 ein. Rahmenelement 39 und Dichtungsrahmen 40 können durch eine umlaufende Ultraschallverschweißung, die als Doppel-Quetschnaht ausgeführt ist, fest und dauerhaft miteinander verbunden werden. Dadurch wird ein Eindringen von Wasser in den Innenraum zwischen Rahmenelement 39 und Dichtungsrahmen 40 verhindert.

Hinsichtlich der Werkstoffe von Rahmenelement 39 und Dichtungsrahmen 40 wird beispielhaft auf die vorstehenden Ausführungen zum zweiten Ausführungsbeispiel verwiesen.

Das zweite Gehäuseteil 11 ist bevorzugt insgesamt transparent ausgelegt und zumindest in einem Bodenbereich 18 beidseitig hochglanzpoliert ausgeführt. Damit bildet das gesamte Gehäuseteil 11 oder zumindest der Bodenbereich 18 einen transparenten Bereich, durch den qualitativ hochwertige Aufnahmen mit der Kamera eines eingesetzten Mobiltelefons ermöglicht werden. Hinsichtlich der Werkstoffe und der weiteren Ausbildung des zweiten Gehäuseteils wird beispielhaft auf die vorstehenden Ausführungen zum zweiten Ausführungsbeispiel verwiesen.

Die Gehäusedichtung 17 dient der Abdichtung der beiden Gehäuseteile 10, 11 zueinander. Sie ist umlaufend in eine Verschlussrille 16 des zweiten Gehäuseteils 11 eingelegt. Im geschlossenen Zustand des Gehäuses 31 sind erstes Gehäuseteil 10 und zweites Gehäuseteil 11 gegen die Gehäusedichtung 17 gepresst. Hinsichtlich des Werkstoffes der Gehäusedichtung 17 sei wiederum beispielhaft auf das zweite Ausführungsbeispiel verwiesen.

Auch beim dritten Ausführungsbeispiel des Gehäuses 31 gilt, dass aufgrund der Flexibilität der Folie 28 und einer entsprechende Wahl der Gehäuseabmessungen die Verwendung des Gehäuses 31 für verschieden große und/oder unterschiedlich geformte Mobiltelefone 32 möglich ist. Eine Modellabhängigkeit ist somit nicht gegeben. Insbesondere ermöglicht das Gehäuse 31, da das erste Gehäuseteil 10 (mit der transparenten Folie 28) und das zweite Gehäuseteil 11 jeweils einen transparenten Bereich aufweisen, ein Fotografieren mit der Kamera eines Mobiltelefons sowohl, wenn die Kamera an der Oberseite des Mobiltelefons angeordnet ist, als auch, wenn die Kamera sich an der Unterseite des Mobiltelefons befindet.

### Bezugszeichenliste

- 10: erstes Gehäuseteil, Oberschale, Oberteil
- 11: zweites Gehäuseteil, Unterschale, Unterteil, transparenter Bereich
- 12: Verschlussspangen
- 13: Haken, Verschlusshaken
- 14: Kopfteil
- 15: Fußteil
- 16: Verschlussrille
- 17: Gummidichtung, Dichtgummi, Gehäusedichtung
- 18: Boden, Bodenbereich, transparenter Bereich
- 19: Seitenwände
- 20: Falz
- 21: Steg, Rahmen, Komponente
- 22: Laschen
- 23: Teilbereich (geringer Dichte), transparenter Bereich
- 24: Innenraum
- 25: Oberkante des Stegs 21
- 26: Unterkante des Stegs 21
- 27: Oberkante des zweiten Gehäuseteils 11
- 28: Folie, transparentes und elastisches Material, Membrandichtung, transparenter Bereich
- 29: Anschlagfläche
- 30: Hohlraum
- 31: Gehäuse
- 32: Mobiltelefon
- 33: Oberseite des Mobiltelefons 32
- 34: Anzeige des Mobiltelefons 32
- 35: Tastenblock/Tasten des Mobiltelefons 32
- 36: Unterseite des Mobiltelefons 32
- 37, 38: Verschlusselemente
- 39: Rahmenelement, Komponente
- 40: Dichtungsrahmen, Komponente
- 41: Ausnehmung bzw. Nut im Rahmenelement 39
- 42: Ausnehmung bzw. Nut im Dichtungsrahmen 40
- 43: Vorsprung am Dichtungsrahmen 40
- 44: Ausnehmung im Rahmenelement 39
- 45: Rippe bzw. Verdickung der Folie 28
- 46: Innenraum des Gehäuses 31
- 47: Außenraum
- 48: Kante
- 50, 51: Verschlusselemente

## Patentansprüche

1. Wasserdichtes Gehäuse (31), insbesondere Unterwassergehäuse, ausgebildet und bestimmt für ein mit einer Kamera ausgerüstetes Mobiltelefon (32), umfassend
a) ein wasserdichtes erstes Gehäuseteil (10) und
b) ein wasserdichtes zweites Gehäuseteil (11),
c) wobei erstes Gehäuseteil (10) und zweites Gehäuseteil (11) wasserdicht miteinander verbindbar oder verbunden sind,
d) wobei im ersten Gehäuseteil (10) und/oder im zweiten Gehäuseteil (11) zumindest ein transparenter Bereich (23, 18, 28, 11) vorgesehen und derart angeordnet ist, dass Aufnahmen mit der Kamera des in das Gehäuse eingesetzten Mobiltelefons durch den transparenten Bereich (23) erfolgen können.
e) wobei Befestigungsmittel zur Fixierung des Mobiltelefons zwischen erstem Gehäuseteil (10) und zweitem Gehäuseteil (11) vorgesehen sind, und wobei
f) die Befestigungsmittel durch ein transparentes und elastisches Material, insbesondere eine Folie (28) gebildet sind, die zunächst einen Teil des ersten Gehäuseteils (10) und/oder des zweiten Gehäuseteils (11) ausbildet.

2. Gehäuse nach Anspruch 1,
**dadurch gekennzeichnet,**
**dass** das transparente und/oder elastische Material (28) insbesondere die Folie (28) eine Silikonfolie (28) umfasst.

3. Gehäuse nach Anspruch 1 oder 2, bei dem zumindest ein Teilbereich (23) des transparenten Bereichs (23, 18) eine geringere Dicke als jeweils angrenzende Gehäusebereiche aufweist.

4. Gehäuse nach einem der vorhergehenden Ansprüche, bei dem das transparente und/oder elastische Material (28) den transparenten Bereich oder einen der transparenten Bereiche umfasst oder bildet.

5. Gehäuse nach einem der vorhergehenden Ansprüche, bei dem das transparente und/oder elastische Material (28) hitzebeständig und/oder UV-beständig und/oder salzwasserresistent und/oder alterungsbeständig und/oder kratzfest ist.

6. Gehäuse nach einem der vorhergehenden Ansprüche, bei dem das transparente und/oder elastische Material (28) getragen ist von einer oder mehreren, vorzugsweise zwei, aus festem Material, insbesondere Kunststoff, gebildeten Komponenten (21, 39, 40) des jeweiligen Gehäuseteils (10), insbesondere mit dieser oder diesen Komponenten (21, 39, 40) durch eine Schweißung, vorzugsweise Kunststoffschweißung, und/oder Klebeverbindung und/oder Klemmverbindung und/oder formschlüssige Verbindung und/oder kraftschlüssige Verbindung fest und/oder wasserdicht verbunden ist.

7. Gehäuse nach Anspruch 6, bei dem
a) das transparente und/oder elastische Material (28) eine oder mehrere, insbesondere an jeder Seite zwei, umlaufende Verdickungen (45) oder Rippen (45) umfasst, vorzugsweise an oder nahe an einem Rand des transparenten und/oder elastischen Materials (28), und
b) die Komponente (21) oder die Komponenten (39, 40) des Gehäuseteils (10) jeweils eine oder mehrere, insbesondere zwei, Ausnehmungen (41, 42) oder Nuten (41, 42) zur Aufnahme der Verdickung(en) (45) oder Rippe(n) (45) des transparenten und/oder elastischen Materials (28) aufweisen.

8. Gehäuse nach Anspruch 7, bei dem über die in die Ausnehmungen (41, 42) oder Nuten (41, 42) eingreifenden Verdickungen (45) oder Rippen (45) eine form- und/oder kraftschlüssige Verbindung zwischen dem transparenten und/oder elastischen Material (28) und den Komponenten (21, 39, 40) des Gehäuseteils (10) ausgebildet ist.

9. Gehäuse nach Anspruch 7 oder 8, bei dem die Verdickungen (45) oder Rippen (45) einstückig mit dem transparenten und/oder elastischen Material (28) ausgebildet sind.

10. Gehäuse nach einem der Ansprüche 6 bis 9, bei dem das transparente und/oder elastische Material (28) im Gehäuseteil (10) verankert ist durch eine Klemmung zwischen mindestens zwei Komponenten (39, 40) des Gehäuseteils (10).

11. Gehäuse nach einem der vorhergehenden Ansprüche, bei dem das transparente und/oder elastische Material (28) so im Gehäuse angeordnet ist, dass ein Tastenbereich (35) und/oder ein Anzeigebereich (34) des in das Gehäuse eingesetzten Mobiltelefons (32) vom transparenten und/oder elastischen Material (28) überdeckt, insbesondere überspannt, wird, insbesondere die Tasten (35) über das transparente und/oder elastische Material (28) bedienbar und/oder die Anzeige (34) durch das transparente und/oder elastische Material (28) sichtbar ist.

12. Gehäuse nach einem der vorgehenden Ansprüche, bei dem erstes Gehäuseteil (10) und/oder zweites Gehäuseteil (11) zumindest bereichsweise fest ausgebildet sind, insbesondere zumindest bereichsweise ein im Wesentlichen nicht verformbares Material, vorzugsweise einen salzwasserresistenten und/oder splitterfreien und/oder transparenten Kunststoff, insbesondere Polycarbonat und/oder ein Polycarbonat-Blend, umfassen.

13. Gehäuse nach einem der vorhergehenden Ansprüche, bei dem die wasserdichte Verbindung zwischen erstem Gehäuseteil (10) und zweitem Gehäuseteil (11) eine Dichtung, insbesondere eine Gummidichtung (17), umfasst und/oder erstes Gehäuseteil (10) und zweites Gehäuseteil (11) in einem verbundenen Zustand zumindest teilweise formschlüssig ineinander greifen.

14. Gehäuse nach einem der vorhergehenden Ansprüche, bei dem die wasserdichte Verbindung zwischen erstem Gehäuseteil (10) und zweitem Gehäuseteil (11) durch eine lösbare Schließeinrichtung, insbesondere mindestens eine, vorzugsweise zwei, Verschlussspangen (12) an einem Gehäuseteil (11), die mit entsprechenden Haken (13) am anderen Gehäuseteil (10) zusammenwirken, hergestellt oder herstellbar ist.

15. Gehäuse nach einem der vorhergehenden Ansprüche, bei dem am ersten Gehäuseteil (10) und/oder am zweiten Gehäuseteil (11) mindestens eine Einrichtung zum Anbringen eines Trageriemens, insbesondere eine Befestigungslasche (22), vorgesehen ist..

16. Gehäuse nach einem der vorhergehenden Ansprüche,
a) ausgebildet für die Aufnahme eines mit einer Kamera ausgerüsteten Mobiltelefons (32), das an einer Oberseite (33) eine Anzeige (34) und einen Tastenblock (35) aufweist und an einer der Oberseite (33) gegenüberliegenden Unterseite (36) eine Linse der Kamera aufweist,
b) bei dem das erste Gehäuseteil (10) die Oberseite (33) des eingesetzten Mobiltelefons (32) überdeckt und ein die Anzeige (34) und/oder den Tastenblock (35) überdeckender Teilbereich des ersten Gehäuseteils (10) aus einem transparenten und/oder elastischen, insbesondere dehnbaren, Material (28), vorzugsweise einer Folie (28), besteht, und
c) bei dem das zweite Gehäuseteil (11) die Unterseite (36) des eingesetzten Mobiltelefons (32) überdeckt und zumindest ein Teilbereich (23) des zweiten Gehäuseteils (11), der die Linse der Kamera überdeckt, transparent ausgebildet ist, insbesondere aus Kunststoff, vorzugsweise Polycarbonat.

17. Gehäuse nach Anspruch 16, bei dem das transparente und/oder elastische Material (28) des erste Gehäuseteils (10) die gesamte Oberseite (33) des eingesetzten Mobiltelefons (32) überdeckt, wobei das Material (28) getragen wird von einem fest ausgebildeten, insbesondere im Wesentlichen aus Kunststoff bestehenden, Steg (21, 40) und/oder Rahmenelement (39) des ersten Gehäuseteils (10).

18. Gehäuse nach Anspruch 16 oder 17, bei dem der die Linse überdeckende Teilbereich (23) des zweiten Gehäuseteils (11) eine geringere Dicke als angrenzende Gehäusebereiche oder das restliche zweite Gehäuseteil (11) aufweist.

19. Gehäuse nach Anspruch 18, bei dem der die Linse überdeckende Teilbereich (23) geringerer Dicke in etwa 5 bis 50 Prozent, vorzugsweise 30 bis 45 Prozent, insbesondere etwa 40 Prozent, eines Bodens (18) des zweiten Gehäuseteils (11) umfasst.

20. Gehäuse nach einem der Ansprüche 1 bis 15,
a) ausgebildet für die Aufnahme eines mit einer Kamera ausgerüsteten Mobiltelefons, das an einer Oberseite eine Anzeige und einen Tastenblock und eine Linse der Kamera aufweist,
b) bei dem das erste Gehäuseteil (10) die Oberseite des eingesetzten Mobiltelefons überdeckt,
c) bei dem ein den Tastenblock und/oder zumindest teilweise die Anzeige überdeckender Teilbereich des ersten Gehäuseteils (10) aus einem transparenten und/oder elastischen, insbesondere dehnbaren, Material (28), vorzugsweise einer Folie (28), besteht, und
d) bei dem ein die Linse der Kamera und/oder zumindest teilweise die Anzeige überdeckender Teilbereich des ersten Gehäuseteils (10) aus einem festen und transparenten Material, insbesondere Kunststoff, vorzugsweise Polycarbonat, gebildet ist.

21. Gehäuse nach einem der vorhergehenden Ansprüche,
a) ausgebildet für die Aufnahme eines mit einer Kamera ausgerüstetes Mobiltelefon, das über ein Gelenk, insbesondere ein Scharnier, zusammenklappbar ausgebildet ist,
b) bei dem im Bereich des Gelenks des in das Gehäuse eingesetzten Mobiltelefon ein Einleger, insbesondere ein fest ausgebildeter, vorzugsweise im Wesentlichen nicht verformbarer Einleger, angeordnet oder anordenbar ist.

22. Gehäuse nach einem der vorhergehenden Ansprüche, bei dem das in das Gehäuse eingesetzte Mobiltelefon durch Formschluss mit dem Gehäuse im Gehäuse fixiert oder fixierbar ist und/oder Mittel zum Fixieren des Mobiltelefons (32) im Gehäuse (31), insbesondere Federn und/oder elastische Materialien (28), vorgesehen sind.

23. Gehäuse nach einem der vorhergehenden Ansprüche, ausgebildet und geeignet für die Aufnahme verschiedener Mobiltelefon-Modelle.

24. Mobiltelefon-Set umfassend
a) ein mit einer Kamera ausgerüstetes Mobiltelefon (32) und
b) ein Gehäuses (31) nach einem der vorhergehenden Ansprüche,
c) wobei das Gehäuse (31) dem Benutzer das Telefonieren und/oder das Fotografieren und/oder das Filmen und/oder das Weiterleiten von Fotos und/oder Filmen unter Wasser oder im Wasser ermöglicht.

25. Mobiltelefon-Set nach Anspruch 24, zusätzlich umfassend ein wasserfestes Head-Set umfassend Kopfhörer, insbesondere ausgebildet als Ohrstöpsel, und/oder Mikrofon, wobei eine drahtlose Übertragung, insbesondere eine Unterwasser-Übertragung, zwischen Mobiltelefon (32) und Head-Set vorgesehen ist, insbesondere nach dem Bluetooth-Standard und/oder mittels Funkübertragung und/oder Infrarotstrahlung und/oder Ultraschall.
